(19) Europäisches Patentamt
European Patent Office
Office européen des brevets

(11) Numéro de publication: **0 672 711 A1**

(12) **DEMANDE DE BREVET EUROPEEN**

(21) Numéro de dépôt: **95200505.6**

(51) Int. Cl.[6]: **C08K 3/22**

(22) Date de dépôt: **02.03.95**

(30) Priorité: **15.03.94 FR 9403121**

(43) Date de publication de la demande: **20.09.95 Bulletin 95/38**

(84) Etats contractants désignés: **AT BE DE ES FR GB IT NL PT SE**

(71) Demandeur: **SOLVAY (Société Anonyme)**
**Rue du Prince Albert, 33**
**B-1050 Bruxelles (BE)**

(72) Inventeur: **Dewitt, Roland**
**Avenue Hospitaliers de Saint-Jean, 19**
**B-1410 Waterloo (BE)**
Inventeur: **Van Weynbergh, Jacques**
**Rue des Chats, 161**
**B-1080 Bruxelles (BE)**
Inventeur: **Timmermans, Jean-Pierre**
**Kaardeloodstraat, 50/9**
**B-9400 Ninove (BE)**

(74) Mandataire: **Marckx, Frieda et al**
**Solvay S.A.**
**Département de la Propriété Industrielle**
**310, rue de Ransbeek**
**B-1120 Bruxelles (BE)**

(54) **Composition pigmentée à base de polyoléfine et procédé de fabrication d'objets façonnés à partir de la composition.**

(57) Composition pigmentée à base de polyoléfine comprenant de 0,01 à 5 parties en poids pour 100 parties en poids de polyoléfine d'un pigment inorganique à phases mixtes d'oxydes de titane, d'antimoine et d'un métal choisi parmi le groupe contenant le baryum, le nickel, le chrome et le manganèse.

Procédé de fabrication d'objets façonnés à partir de la composition.

EP 0 672 711 A1

L'invention concerne une composition pigmentée à base de polyoléfine comprenant un pigment inorganique, en particulier de couleur jaune. Elle concerne également des objets façonnés à partir de cette composition, en particulier des tuyaux.

Par pigment on entend désigner une substance pulvérulente dotée d'un pouvoir colorant et/ou opacifiant, généralement insoluble dans la matière à colorer.

Il est généralement connu d'utiliser le bioxyde de titane de couleur blanche comme agent opacifiant dans des matières plastiques et d'y ajouter un pigment souvent organique pour obtenir la teinte souhaitée. Afin d'obtenir des matières plastiques de couleurs variées, par exemple de couleur jaune, on a déjà proposé dans la demande de brevet JP 75/73940 d'utiliser un mélange de bioxyde de titane avec un pigment jaune. En effet, dans cette demande de brevet, on prépare un mélange-maître destiné à colorer du polyéthylène en mélangeant 1000 g de bioxyde de titane, 400 g d'un produit dénommé "Titan Yellow", 100 g d'un agent dispersant et 700 g de polyéthylène.

Ce mélange connu nécessite, afin d'obtenir une composition de couleur jaune, une quantité relativement élevée de pigment jaune de couleur vive (car celui-ci est dilué par le bioxyde de titane de couleur blanche). Ces pigments jaunes disponibles sur le marché sont généralement coûteux.

L'utilisation d'un mélange-maître tel que décrit ci-dessus pour la coloration de polyéthylène présente en outre l'inconvénient de provoquer rapidement, lorsqu'il est mélangé au polyéthylène vierge pour obtenir une composition finale - en général dans un procédé de granulation par extrusion - une abrasion des parties de l'installation qui sont en contact avec le mélange mis en oeuvre. En particulier, dans une chaîne de granulation par extrusion, il provoque une forte abrasion de la pompe à engrenage qui a pour fonction d'alimenter l'extrudeuse à débit élevé, ainsi que des zones de malaxage de la vis d'extrudeuse. Une abrasion se produit également lorsque la composition finale ainsi obtenue est mise en oeuvre dans un procédé de fabrication d'objets façonnés par exemple par extrusion, par extrusion-soufflage, par extrusion-thermoformage ou par injection. Un tel phénomène d'abrasion des équipements nécessite de renouveller l'installation fréquemment, ce qui est industriellement inacceptable.

L'invention remédie à ces inconvénients en fournissant une composition nouvelle à base de polyoléfine comprenant un pigment inorganique, qui, lorsqu'elle est mise en oeuvre, par exemple dans un procédé d'extrusion, ne provoque pas d'abrasion de l'installation. Un autre objectif de l'invention est de réduire au maximum, dans cette composition, la teneur en pigment de couleur vive tout en conservant le ton de coloration et son opacité. L'invention vise en outre à fournir une composition pigmentée dont la couleur est thermiquement stable et résistante au rayonnement UV.

A cet effet, l'invention concerne une composition pigmentée à base de polyoléfine, caractérisée en ce qu'elle comprend pour 100 parties en poids de polyoléfine de 0,01 à 5 parties en poids d'un pigment inorganique à phases mixtes d'oxydes de titane, d'antimoine et d'un autre métal choisi parmi le groupe contenant le baryum, le nickel, le chrome et le manganèse. Parmi ces autres métaux on préfère le nickel et le chrome. Le nickel convient particulièrement bien.

Par "phases mixtes d'oxydes", on entend désigner les mélanges intimes d'oxydes qui peuvent par exemple être obtenus par traitement thermique d'un mélange de plusieurs oxydes à très haute température mais inférieure à la température de tusion des oxydes. Ces mélanges intimes, qu'on appelle aussi "oxydes mixtes", se différencient de mélanges physiques d'oxydes préparés par exemple par mélange mécanique à température ambiante de plusieurs oxydes.

De préférence, le pigment inorganique de la composition selon l'invention présente une structure cristalline "rutile".

Le pigment inorganique de la composition selon l'invention comprend généralement au moins 35 % en poids de titane, plus particulièrement au moins 42 % en poids, les teneurs en titane d'au moins 47 % en poids étant recommandées. La teneur en titane ne dépasse pas, le plus souvent, 60 % en poids, plus particulièrement pas 53 % en poids, les teneurs d'au plus 49 % en poids étant les préférées.

Habituellement, le pigment comprend au moins 1 % en poids d'antimoine, en particulier au moins 2 % en poids, les teneurs d'au moins 4,5 % en poids étant les plus avantageuses. De préférence, la teneur en antimoine est au plus égale à 10 % en poids, en particulier au plus égale à 8 % en poids, les teneurs d'au plus 6,5 % en poids étant spécialement préférées.

En général, le pigment contient au moins 1 % en poids du métal autre que le titane et l'antimoine, plus précisément au moins 2 % en poids, les valeurs d'au moins 3 % en poids étant les plus courantes. La teneur en métal est habituellement au maximum égale à 10 % en poids, plus spécialement au maximum égale à 8 % en poids, les teneurs d'au plus 5 % en poids étant les plus courantes.

Le titane est généralement présent sous la forme de bioxyde de titane et l'antimoine sous forme de trioxyde d'antimoine. Lorsque le métal est le nickel, celui-ci est le plus souvent présent sous la forme de monoxyde de nickel. Le pigment inorganique contient habituellement en outre des traces de sodium, de magnésium, de phosphore et de fer dont la teneur en chacun de ces éléments ne dépasse pas, en général, 1 % en poids du pigment inorganique.

Le pigment inorganique de la composition selon l'invention se présente avantageusement sous la forme d'une poudre de particules dont la distribution granulométrique est caractérisée par un diamètre moyen D mesuré par granulométrie laser au moyen d'un appareil MALVERN®MSIZER 20 et défini par la relation suivante :

$$D = \frac{\Sigma n_i D_i}{\Sigma n_i}$$

où $n_i$ désigne la fréquence pondérale des particules de diamètre $D_i$. Le diamètre D est en général au moins égal à 0,1 µm, de préférence au moins égal à 0,5 µm, les valeurs d'au moins 0,9 µm étant les plus courantes, par exemple environ 2 µm. Le diamètre D ne dépasse pas généralement 10 µm, en particulier pas 5 µm, les valeurs d'au plus 3,5 µm étant recommandées. La distribution granulométrique peut être caractérisée par le diamètre $D_{90}$ qui est défini par le fait que 90 % des particules du pigment inorganique ont un diamètre inférieur au diamètre $D_{90}$. Ce diamètre $D_{90}$ est avantageusement au moins égal à 1 µm, plus précisément au moins égal à 5 µm; les valeurs d'au moins 8 µm étant préférées, par exemple égal à environ 10 µm. Le diamètre $D_{90}$ ne dépasse pas, le plus souvent, 20 µm, plus particulièrement pas 15 µm, les valeurs d'au plus 12 µm étant les plus avantageuses. La distribution granulométrique peut également être définie par le diamètre $D_{10}$ qui se caractérise par le fait que 10 % des particules du pigment inorganique présentent un diamètre inférieur au diamètre $D_{10}$. Ce diamètre $D_{10}$ est habituellement au moins égal à 0,05 µm, en particulier au moins égal à 0,1 µm, de préférence au moins égal à 0,5 µm, par exemple égal à environ 0,75 µm. Le diamètre $D_{10}$ est, le plus souvent, au maximum égal à 5 µm, plus spécialement au maximum égal à 0,1 µm, de préférence au maximum égal à 1 µm. Les diamètres $D_{90}$ et $D_{10}$ tels que définis ci-dessus sont mesurés par granulométrie laser au moyen d'un appareil MALVERN®MSIZER 20.

Dans la plupart des cas, le pigment inorganique de la composition selon l'invention présente une densité, mesurée selon la norme DIN 53193 (1979), au moins égale à 1 g/cm$^3$, de préférence au moins égale à 2 g/cm$^3$, les valeurs d'au moins 3 g/cm$^3$ étant les plus courantes. La densité est en général au maximum égale à 10 g/cm$^3$, en particulier au maximum égale à 8 g/cm$^3$, les valeurs d'au plus égales à 6 g/cm$^3$ étant recommandées. Une densité d'environ 4,5 g/cm$^3$ convient particulièrement bien.

Par ailleurs, le pigment inorganique de la composition selon l'invention est généralement caractérisé par le fait qu'une dispersion de 50 g du pigment dans 1 l d'eau, préparée selon la norme DIN 53200(1978), présente un pH d'au moins 6, de préférence d'au moins 7; le pH ainsi mesuré ne dépasse pas habituellement 10, en particulier pas 9. Les valeurs d'environ 8 s'avèrent les plus avantageuses.

Le pigment inorganique est de préférence de couleur jaune.

Les pigments inorganiques tout particulièrement avantageux dans la composition selon l'invention sont ceux choisis parmi les pigments jaunes commerciaux SICOTAN®.

Les pigments inorganiques utilisables dans la composition selon l'invention peuvent par exemple être obtenus par les procédés décrits dans les demandes de brevet DE-A1-2936746, DE-A1-3019172, DE-A1-3401347 et dans la publication "Nickeltitangelb", Farbe und Lack, vol. 68, n° 3, pages 174-175 (1962).

Selon l'invention, la composition comprend un pigment inorganique en une quantité d'au moins 0,01 partie en poids pour 100 parties en poids de polyoléfine. On obtient des résultats particulièrement satisfaisants avec des teneurs d'au moins 0,03 partie en poids, les teneurs d'au moins 0,05 partie en poids étant les plus avantageuses. La quantité de pigment inorganique est en général au maximum égale à 5 parties en poids pour 100 parties en poids de polyoléfine. Les quantités d'au plus 2 parties en poids sont préférées, les valeurs d'au plus 0,5 étant les plus recommandées. Les quantités de 0,07 à 0,3 conviennent particulièrement bien.

La composition selon l'invention comprend également au moins une polyoléfine. Par polyoléfine, on entend désigner les homopolymères d'oléfines et les copolymères d'oléfines avec un ou plusieurs comonomères, bien connus de l'homme du métier, et leurs mélanges. Les oléfines peuvent par exemple être choisies parmi les oléfines linéaires contenant de 2 à 8 atomes de cabine telles que l'éthylène, le propylène, le 1-butène, le 1-pentène, le 1-hexène et le 1-octène. Les oléfines préférées sont l'éthylène et le propylène. Les comonomères peuvent être choisis parmi les oléfines linéaires décrites ci-dessus, parmi les oléfines branchées telles que le 4-méthylpentène, et parmi les dioléfines comprenant de 4 à 18 atomes de carbone, telles que le 4-vinylcyclohexène, le dicyclopentadiène, le méthylène- et l'éthylidène-norbornène, le 1,3-butadiène, l'isoprène et le 1,3-pentadiène. Les comonomères préférés de l'éthylène sont le butène

et l'hexène; les comonomères préférés du propylène sont l'éthylène et le butène.

De préférence, la polyoléfine est choisie parmi les homopolymères et les copolymères de l'éthylène contenant un ou plusieurs comonomères. Parmi les copolymères de l'éthylène on donne la préférence à ceux contenant du butène ou de l'hexène à titre de comonomère. En général, la quantité de butène ou d'hexène dans le copolymère est au moins égale à 0,01 % mol, en particulier au moins égale à 0,05 % mol, les quantités d'au moins 0,1 % mol étant les plus avantageuses. La quantité de butène ou d'hexène est habituellement au maximum égale à 10 % mol, plus précisément au maximum égale à 5 % mol, les quantités d'au plus 3 % mol étant recommandées. On obtient des résultats particulièrement performants avec des quantités de butène ou d'hexène de 0,4 à 1 % mol.

La polyoléfine présente en général une masse volumique standard, mesurée selon la norme ISO 1183 (1987), d'au moins 920 kg/$m^3$, le plus souvent d'au moins 930 kg/$m^3$, les valeurs d'au moins 935 kg/$m^3$ étant les plus avantageuses. La masse volumique standard est couramment au maximum égale à 960 kg/$m^3$, plus spécialement au maximum égale à 955 kg/$m^3$, les valeurs d'au plus 950 kg/$m^3$ étant recommandées.

Le plus souvent, la polyoléfine est en outre caractérisée par un indice de fluidité, mesuré à 190 °C sous une charge de 5 kg selon la norme ISO 1133 (1991), d'au moins 0,05 g/10 min, en particulier d'au moins 0,1 g/10 min, les valeurs d'au moins 0,2 étant les plus courantes. L'indice de fluidité ne dépasse pas en général 10 g/10 min, de préférence pas 5 g/10 min, les valeurs d'au plus égale à 2 g/10 min étant recommandées.

Lorsque l'on souhaite obtenir une composition d'une couleur prédéterminée, il peut s'avérer nécessaire d'incorporer dans la composition selon l'invention en outre un pigment organique, en général contenant des radicaux aromatiques. Celui-ci peut être choisi parmi les pigments organiques azoïques comprenant dans leur structure chimique au moins un groupe (-N=N-), parmi les sels métalliques de composés azoïques contenant par exemple des groupes -COOH ou $-SO_3H$, en particulier les sels de baryum ou de calcium, parmi les pigments de type quinophtalone, parmi les phtalocyanines, parmi les pigments de type quinacridine, parmi les dérivés d'anthraquinone, les dérivés de pérylène, et les pigments de type thio-indigo. On peut citer à titre d'exemples de pigments organiques de type monoazo le benzimidazolone, de type diazo les diarylides, les pyrazolones et le dianisidine. On préfère les pigments de type quinophtalone. Le pigment organique jaune de type quinophtalone qui répond à la formule

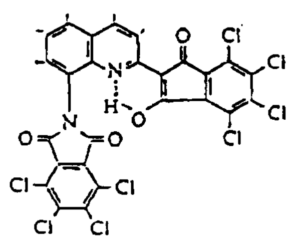

convient particulièrement bien.

La quantité de pigment organique incorporée dépend de la couleur souhaitée; elle est en général au moins égale à 0,01 partie en poids pour 100 parties en poids de polyoléfine, de préférence au moins égale à 0,03 partie en poids, les valeurs d'au moins 0,05 partie en poids étant les plus avantageuses. La quantité de pigment organique est habituellement au maximum égale à 5 parties en poids pour 100 parties en poids de polyoléfine, de préférence au maximum égale à 2 parties en poids, plus particulièrement à 0,5 partie en poids.

L'incorporation d'un pigment organique dans la composition selon l'invention présente l'avantage de permettre l'obtention de différents tons prédéterminés dans une large gamme sans que cela nécessite une quantité élevée de pigment organique, qui est un produit coûteux.

Outre la polyoléfine et le pigment inorganique et éventuellement le pigment organique, la composition selon l'invention peut également contenir des additifs usuels tels que des stabilisants (par exemple des anti-acides, des anti-oxydants et/ou des anti-UV), des agents antistatiques et des agents de mise en oeuvre ("processing aid"). La teneur en chacun des additifs est en général inférieure à 10 parties en poids pour 100 parties en poids de polyoléfine.

Les additifs qui conviennent bien sont par exemple le pentaérythrityl tétrakis(3,5-di-t-butyl-4-hydroxyphényl propionate) (additif anti-oxydant), le tris(2,4-di-t-butylphényl)phosphite (additif anti-oxydant), les polyesters d'acide succinique avec n-bètahydroxyéthyl-2,2,6,6-tétraméthyl-4-hydroxypipéridine (additifs anti-UV), le 2-(2'-hydroxy,3'-t-butyl,5'-méthylphényl)-5-chlorobenzotriazole (additif anti-UV), le 4,4'-thiobis(2-t-butyl-5-méthylphénol) (additif anti-oxydant), le stéarate de calcium (additif anti-acide), le bis(2,2,6,6-tétraméthyl-4-pipéridinyl) sébacate (additif anti-UV) et le 2-hydroxy,4-octoxybenzophénone (additif anti-UV).

La composition selon l'invention peut être obtenue selon tout moyen connu adéquat. Par exemple, une méthode de préparation de la composition selon l'invention consiste à introduire le pigment inorganique et éventuellement le pigment organique et/ou des additifs usuels tels que définis ci-dessus, à l'état de mélange en poudre, dans la polyoléfine. Une méthode alternative préférée

consiste à mélanger la polyoléfine avec le pigment inorganique et éventuellement le pigment organique et/ou des additifs usuels tels que définis ci-dessus à température ambiante, et ensuite à les mélanger à une température supérieure à la température de tusion du polymère, par exemple dans un mélangeur mécanique ou dans une extrudeuse.

On peut aussi préparer, dans un premier temps, un mélange-maître comprenant une première fraction de la polyoléfine, le pigment inorganique et éventuellement un pigment organique et/ou des additifs usuels tels que définis ci-dessus, ce mélange-maître étant riche en pigment inorganique. La teneur en pigment inorganique dans ce mélange-maître est en général de 0,05 à 50 % en poids, de préférence de 0,5 à 40 % en poids, plus particulièrement de 1 à 30 % en poids du mélange. Spécialement préférés sont les mélanges contenant de 2 à 25 % en poids de pigment inorganique. Ce mélange-maître est ensuite mélangé à la fraction restante de la polyoléfine lors de la fabrication de granules de la composition.

Ces méthodes permettent d'obtenir la composition sous la forme d'une poudre que l'on peut éventuellement soumettre ensuite à une granulation pour obtenir la composition à l'état de granules. De manière connue, des granules sont obtenues par extrusion de la composition en coupant le jonc sortant de l'extrudeuse en granules. Le procédé de granulation peut être effectué en alimentant une extrudeuse en un mélange préalablement préparé d'une polyoléfine avec un pigment inorganique (et éventuellement un pigment organique et/ou des additifs usuels) et en recueillant des granules à la sortie de l'installation. Une variante du procédé de granulation consiste à introduire un mélange-maître tel que décrit ci-dessus et une deuxième partie de la polyoléfine dans l'extrudeuse.

La préférence est donnée aux compositions qui se trouvent à l'état de granules extrudés.

La composition selon l'invention présente avantageusement une masse volumique standard, mesurée selon la norme ISO 1183 (1987), d'au moins 925 $kg/m^3$, le plus souvent d'au moins 935 $kg/m^3$, les valeurs d'au moins 938 $kg/m^3$ étant les plus courantes. La masse volumique standard est habituellement au maximum égale à 965 $kg/m^3$, plus spécialement au maximum égale à 960 $kg/m^3$, les valeurs d'au plus 955 $kg/m^3$ étant recommandées.

Par ailleurs, la composition selon l'invention présente habituellement un indice de fluidité, mesuré à 190 °C sous une charge de 5 kg selon la norme ISO 1133 (1991), d'au moins 0,05 g/10 min, en particulier d'au moins 0,1 g/10 min, les valeurs d'au moins 0,2 g/10 min étant les plus courantes. L'indice de fluidité ne dépasse pas en général 10 g/10 min, de préférence pas 5 g/10 min, les valeurs d'au plus égale à 2 g/10 min étant recommandées.

La composition selon l'invention présente l'avantage qu'eue peut être obtenue dans un procédé de granulation par extrusion ou être mise en oeuvre à l'état de poudre ou à l'état de granules dans un procédé de façonnage d'articles en fondu sans provoquer de phénomène d'abrasion tel que décrit plus haut. Un autre avantage de la composition selon l'invention réside dans sa coloration stable qui n'est pas sensible à la dégradation thermique ni à la dégradation par les rayonnements UV. En outre, la composition selon l'invention ne nécessite, afin de moduler le ton de la couleur de manière précise, qu'une quantité réduite de pigment organique.

La composition selon l'invention est apte à être mise en oeuvre selon tous les procédés classiques de fabrication d'objets façonnés en polyoléfine et plus particulièrement selon les procédés d'extrusion, d'extrusion-soufflage, d'extrusion-thermoformage et d'injection. Elle convient pour la fabrication d'objets façonnés tels que les tuyaux, les feuilles, les plaques, les récipients, les sacs ou les sachets. Elle convient particulièrement bien pour la fabrication de tuyaux, notamment les tuyaux pour le transport de fluides, par exemple de gaz sous pression.

Dès lors, la présente invention porte aussi sur un procédé de fabrication d'objets façonnés à partir de la composition selon l'invention, en particulier un procédé par extrusion, notamment de tuyaux pour la transport de fluides, par exemple de gaz sous pression.

L'invention concerne également les objets façonnés à partir de la composition selon l'invention, en particulier des tuyaux, notamment pour le transport de fluides, par exemple de gaz sous pression.

Les exemples dont la description suit, servent à illustrer l'invention. La signification des symboles utilisés dans ces exemples, les unités exprimant les grandeurs mentionnées et les méthodes de mesure de ces grandeurs sont explicitées ci-dessous.

MI = indice de fluidité de la polyoléfine ou de la composition, exprimé en g/10 min, mesuré à 190 °C sous une charge de 5 kg selon la norme ISO 1133 (1991).

MVS = masse volumique standard de la polyoléfine ou de la composition, exprimée en $kg/m^3$, mesurée selon la norme ISO 1183 (1987).

CI = indice de couleur ("Colour Index") d'un pigment selon la classification mise au point par "Society of Dyers and Colourists", UK (SDC) en collaboration avec "American Association of Textile Chemists and Colourists", USA (AATCC).

D = diamètre moyen des particules de pigment inorganique, exprimé en $\mu$m, tel que défini plus haut et mesuré par granulométrie laser au moyen d'un appareil MALVERN®MSIZER 20.

$D_{90}$ = diamètre exprimé en $\mu$m caractérisant les particules de pigment inorganique de manière à ce que 90 % de ces particules présentent un diamètre inférieur au diamètre $D_{90}$, mesuré par granulométrie laser au moyen d'un appareil MALVERN®MSIZER 20.

$D_{10}$ = diamètre exprimé en $\mu$m caractérisant les particules de pigment inorganique de manière à ce que 10 % de ces particules présentent un diamètre inférieur au diamètre $D_{10}$, mesuré par granulométrie laser au moyen d'un appareil MALVERN®MSIZER 20.

Exemple 1 (de référence)

Dans cet exemple on a préparé une composition à base de polyoléfine comprenant, au lieu d'un pigment inorganique à phases mixtes, du bioxyde de titane. La composition comprenait également un pigment organique et des additifs usuels.

On a mélangé dans un mélangeur mécanique rapide à température ambiante les constituants suivants :

- 100 parties en poids du copolymère d'éthylène utilisé dans l'exemple 1,
- 0,15 partie en poids d'un stabilisant anti-UV [le 2-(2'-hydroxy,3'-t-butyl,5'-méthylphényl)-5-chlorobenzotriazole],
- 0,15 partie en poids d'un stabilisant anti-UV [le bis(2,2,6,6-tétraméthyl-4-pipéridinyl)-sébacate],
- 0,25 partie en poids d'un stabilisant anti-oxydant [constitué de 50 % de pentaérythrityl tétraxis(3,5-di-t-butyl-4-hydroxyphényl propionate et 50 % de tris(2,4-di-t-butylphényl)-phosphite],
- 0,16 partie en poids d'un stabilisant anti-acide [le stéarate de calcium],
- 0,27 partie en poids d'un pigment organique présentant un CI "Yellow 138", et
- 0,018 partie en poids de bioxyde de titane.

Ce mélange a été granulé par extrusion dans une extrudeuse à simple vis de type AXON BX-18 contenant une trémie et 4 zones respectivement à une température de 165, 210, 210, 205 et 185 °C. La vitesse de rotation de la vis d'extrudeuse s'élevait à 125 tours/min. Les conditions de granulation étaient telles qu'on a produit environ 2 kg de granules par heure.

Exemple 2 (conforme à l'invention)

Dans cet exemple on a préparé une composition à base de polyoléfine comprenant un pigment jaune inorganique à phases mixtes d'oxydes de titane, de nickel et d'antimoine, ainsi qu'un pigment organique et des additifs usuels.

On a répété les opérations de l'exemple 1 en mélangeant :

- 100 parties en poids d'un copolymère d'éthylène contenant 0,8 % mol de butène et présentant un MI de 0,8 g/10 min et une MVS de 943 kg/m$^3$,
- 0,25 partie en poids d'un stabilisant anti-UV [le 2-hydroxy,4-octoxybenzophénone],
- 0,15 partie en poids d'un stabilisant anti-oxydant [le 4,4'-thiobis(2-t-butyl-5-méthylphénol)-],
- 0,16 partie en poids d'un stabilisant anti-acide [le stéarate de calcium],
- 0,10 partie en poids d'un pigment organique présentant un CI "Yellow 138", et
- 0,25 partie en poids d'une poudre de pigment jaune inorganique SICOTAN® K1011 à phases mixtes d'oxydes de titane, de nickel et d'antimoine contenant 47,9 % en poids de titane, 5,4 % en poids d'antimoine et 3,9 % en poids de nickel.

Les granules obtenues présentaient un MI de 0,85 g/10 min et une MVS de 945 kg/m$^3$.

On n'a pas constaté de phénomène d'abrasion.

Exemple 3 (de référence)

Dans cet exemple on a préparé une composition à base de polyoléfine comprenant, au lieu d'un pigment inorganique à phases mixtes, du bioxyde de titane. La composition comprenait également un pigment organique et des additifs usuels.

On a répété les opérations de l'exemple 1 en mélangeant :

- 100 parties en poids du copolymère d'éthylène utilisé dans l'exemple 3,
- 0,20 partie en poids d'un stabilisant anti-UV [le 2-(2'-hydroxy,3'-t-butyl,5'-méthylphényl)-5-chlorobenztriazole],
- 0,15 partie en poids d'un stabilisant anti-UV [le bis(2,2,6,6-tétraméthyl-4-pipéridinyl)-sébacate],
- 0,25 partie en poids d'un stabilisant anti-oxydant [constitué de 50 % de pentaérythrityl tétraxis(3,5-di-t-butyl-4-hydroxyphényl propionate et 50 % de tris(2,4-di-t-butylphényl)-phosphite],
- 0,10 partie en poids d'un stabilisant anti-acide [le stéarate de calcium],
- 0,30 partie en poids d'un pigment organique présentant un CI "Yellow 183", et

- 0,030 partie en poids de bioxyde de titane.

Exemple 4 (conforme à l'invention)

Dans cet exemple on a préparé une composition à base de polyoléfine comprenant un pigment jaune inorganique à phases mixtes d'oxydes de titane, de chrome et d'antimoine, ainsi qu'un pigment organique et des additifs usuels.

On a répété les opérations de l'exemple 1 en mélangeant :

- 100 parties en poids d'un copolymère d'éthylène contenant 0,4 % mol de butène et présentant un MI de 0,45 g/10 min et une MVS de 949 kg/m$^3$,
- 0,20 partie en poids d'un stabilisant anti-UV [un polyester d'acide succinique avec le n-bètahydroxyéthyl-2,2,6,6-tétraméthyl-4-hydroxypipéridine]
- 0,15 partie en poids d'un stabilisant anti-UV [le 2-(2'-hydroxy,3'-t-butyl,5'-méthylphényl)-5-chlorobenztriazole],
- 0,25 partie en poids d'un stabilisant anti-oxydant [constitué de 50 % de pentaérythrityl tétrakis(3,5-di-t-butyl-4-hydroxyphényl propionate et 50 % de tris(2,4-di-t-butylphényl)-phosphite],
- 0,10 partie en poids d'un stabilisant anti-acide [le stéarate de calcium],
- 0,20 partie en poids d'un pigment organique présentant un CI "Yellow 183", et
- 0,076 partie en poids d'un pigment jaune inorganique SICOTAN® K2011 à phases mixtes d'oxydes de titane, de chrome et d'antimoine, dont la distribution granulométrique est définie par un diamètre moyen D de 0,75 µm, un diamètre $D_{90}$ de 9,76 µm et un diamètre $D_{10}$ de 0,75 µm.

Les granules ainsi obtenues présentaient un MI de 0,47 g/10 min et une MVS de 953 kg/m$^3$.

On n'a pas constaté de phénomène d'abrasion.

Exemple 5 (conforme à l'invention)

Dans cet exemple on a préparé une composition à base de polyoléfine comprenant un pigment jaune inorganique à phases mixtes d'oxydes de titane, de nickel et d'antimoine, ainsi qu'un pigment organique et des additifs usuels.

On a répété les opérations de l'exemple 1 en mélangeant :

- 100 parties en poids d'un copolymère d'éthylène contenant 1 % mol d'hexène et présentant un MI de 1 g/10 min et une MVS de 939 kg/m$^3$,
- 0,25 partie en poids d'un stabilisant anti-UV [le 2-hydroxy,4-octoxybenzophénone],
- 0,15 partie en poids d'un stabilisant anti-oxydant [le 4,4'-thiobis(2-t-butyl-5-méthylphénol)-],
- 0,10 partie en poids d'un pigment organique présentant un CI "Yellow 138", et
- 0,25 partie en poids d'un pigment jaune inorganique SICOTAN® K1011 à phases mixtes d'oxydes de titane, de nickel et d'antimoine.

Les granules obtenues présentaient un MI de 0,85 g/10 min et une MVS de 943 kg/m$^3$.

On n'a pas constaté de phénomène d'abrasion.

**Revendications**

**1.** Composition pigmentée à base de polyoléfine caractérisée en ce qu'elle comprend pour 100 parties en poids de polyoléfine de 0,01 à 5 parties en poids d'un pigment inorganique à phases mixtes d'oxydes de titane, d'antimoine et d'un autre métal choisi parmi le groupe contenant le baryum, le nickel, le chrome et le manganèse.

**2.** Composition selon la revendication 1, caractérisée en ce que l'autre métal est le nickel.

**3.** Composition selon la revendication 1 ou 2, caractérisée en ce que le pigment inorganique présente une structure cristalline "rutile".

**4.** Composition selon l'une quelconque des revendications 1 à 3, caractérisée en ce que le pigment inorganique contient de 35 à 60 % en poids de titane, de 1 à 10 % en poids d'antimoine et de 1 à 10 % en poids d'un autre métal.

**5.** Composition selon l'une quelconque des revendications 1 à 4, caractérisée en ce que le pigment inorganique est de couleur jaune.

**6.** Composition selon la revendication 5, caractérisée en ce que le pigment inorganique est choisi parmi les pigments jaunes commerciaux SICOTAN®.

**7.** Composition selon l'une quelconque des revendications 1 à 6, caractérisée en ce qu'elle comprend en outre pour 100 parties en poids de polyoléfine de 0,01 à 5 parties en poids d'un pigment organique.

**8.** Composition selon l'une quelconque des revendications 1 à 7, caractérisée en ce que la polyoléfine est choisie parmi les homopolymères et les copolymères de l'éthylène contenant un ou plusieurs comonomères présentant une masse volumique standard (norme ISO 1183 -

1987) de 920 à 960 kg/m$^3$ et un indice de fluidité mesuré à 190 °C sous une charge de 5 kg (norme ISO 1133 - 1991) de 0,05 à 10 g/10 min.

**9.** Composition selon la revendication 8, caractérisée en ce que la polyoléfine est un copolymère de l'éthylène comprenant de 0,01 à 10 % mol de comonomère choisi parmi le butène et l'hexène.

**10.** Composition selon l'une quelconque des revendications 1 à 9, caractérisée en ce qu'elle se trouve à l'état de granules extrudés.

**11.** Procédé de fabrication d'objets façonnés à partir de la composition conforme à l'une quelconque des revendications 1 à 10.

**12.** Procédé selon la revendication 11, caractérisé en ce qu'il est appliqué à l'extrusion de tuyaux destinés au transport de gaz sous pression.

Office européen des brevets

# RAPPORT DE RECHERCHE EUROPEENNE

Numero de la demande
EP 95 20 0505

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP-A-0 233 601 (BASF LACKE + FARBEN AG)<br>* page 3, ligne 22 - ligne 45 *<br>----- | 1 | C08K3/22 |
| | | | **DOMAINES TECHNIQUES RECHERCHES (Int.Cl.6)** |
| | | | C08K<br>C09C |

Le présent rapport a été établi pour toutes les revendications

| Lieu de la recherche | Date d'achèvement de la recherche | Examinateur |
|---|---|---|
| LA HAYE | 19 Juin 1995 | Schueler, D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..........
& : membre de la même famille, document correspondant

EPO FORM 1503 03.82 (P04C02)